# FASCICULE DE BREVET EUROPEEN

(11) **EP 3 841 149 B1**
(45) Date de publication et mention de la délivrance du brevet: **26.07.2023**
(21) Numéro de dépôt: 19773886.7
(22) Date de dépôt: 20.08.2019
(51) Int. Cl.: C08G 65/40, C08G 75/23

(54) **PROCÉDÉ DE PRÉPARATION DE POLYÉTHER-SULFONES AROMATIQUES À BASE D'ISOHEXIDE**
VERFAHREN ZUR HERSTELLUNG VON AROMATISCHEN POLYETHERSULFONEN MIT ISOHEXID
METHOD FOR PRODUCING AROMATIC POLYETHERSULFONES CONTAINING ISOHEXIDE

(30) Priorité: 20.08.2018 FR 1857545
(43) Date de publication de la demande: 30.06.2021
(73) Titulaire: ROQUETTE FRERES, 62136 Lestrem (FR); UNIVERSITE CLAUDE BERNARD - LYON 1, 69622 Villeurbanne Cédex (FR); Centre National de la Recherche Scientifique (CNRS), 75016 Paris (FR)
(72) Inventeur: JACQUEL, Nicolas, 59130 Lambersart (FR); DEGRAS, Sarah, 89100 VILLEURBANNE (FR); MERCIER, Régis, 69540 IRIGNY (FR); DELAUNAY, Thierry, 49350 CHENEHUTTE (FR)
(74) Mandataire: Plasseraud IP
(86) Numéro de dépôt international: PCT/FR2019/000137
(87) Numéro de publication internationale: WO 2020/039127

(56) Documents cités:
- EP-A1- 3 170 855
- WO-A1-2007/039538
- WO-A2-2014/072473
- US-A1- 2005 228 149
- CHAOUKI BELGACEM ET AL: "Copolyethersulfones of 1,4:3,6-dianhydrohexitols and bisphenol A", DESIGNED MONOMERS AND POLYMERS, vol. 19, no. 3, 29 janvier 2016 (2016-01-29), pages 248-255, XP055585593, DOI: 10.1080/15685551.2015.1136531

## Description

### DOMAINE DE L'INVENTION

La présente invention concerne un procédé de préparation d'un copolymère à blocs de type polyéthersulfone à base d'un diol biosourcé, un copolymère à blocs susceptible d'être obtenu par ledit procédé, ainsi que l'utilisation dudit copolymère à blocs pour la fabrication de membranes.

### ÉTAT DE LA TECHNIQUE

Les polyéthersulfones sont des polymères thermoplastiques, notamment bien connus pour leur résistance à la température. Ils présentent également une bonne résistance à l'hydrolyse ce qui permet leur utilisation dans des applications médicales, nécessitant par exemple une stérilisation à l'autoclave. Ces polymères sont aussi utilisés pour la fabrication une des membranes, avec un contrôle de la taille des pores jusqu'à 40 nanomètres. De telles membranes peuvent être utilisées dans des applications telles que l'hémodialyse, la récupération des eaux usées, le traitement des aliments et des boissons et la séparation des gaz.

Les isohexides, ou 1,4:3,6-dianhydrohexitols, sont des diols chiraux bicycliques rigides issus de sucres. En particulier, l'isosorbide est obtenu à partir de la double réaction de déshydratation du sorbitol, lui-même issu de la réaction d'hydrogénation du glucose. Les isohexides constituent des intermédiaires de choix dans la synthèse de nombreux composés qui trouvent leurs applications dans différents domaines comme celui de l'industrie plastique, remplaçant ainsi leurs homologues issus de la pétrochimie. Les isohexides peuvent être utilisés pour la fabrication de polymères de spécialité de type polyéthersulfones, polymères dits de hautes performances ayant pour principale application les membranes de séparation en phase liquide et gazeuse.

Ainsi, Kricheldorf et al. ont d'abord décrit la préparation et la caractérisation de polyéthersulfones contenant de l'isosorbide à partir d'isosorbide silylé et de difluorodiphénylsulfone (H. Kricheldorf et al., J. Polymer Sci., Part A: Polym. Chem., 1995, 33, 2667-2671). L'isosorbide silylé ayant un coût élevé, Kricheldorf et Chatti ont modifié leurs conditions de polymérisation et ont décrit la synthèse de polyéthersulfones contenant de l'isosorbide à partir d'isosorbide non fonctionnalisé et de difluorodiphénylsulfone (S. Chatti et al., High Perform. Polym., 2009, 21, 105-118).

La demande de brevet WO 2014/072473 décrit la synthèse de polyéthersulfones contenant notamment un 1,4:3,6-dianhydrohexitol choisi parmi l'isosorbide, l'isomannide et l'isoidide, et un monomère dihaloaryl.

Belgacem et al. ont ensuite décrit la synthèse de polyéthersulfones contenant un 1,4:3,6-dianhydrohexitol et du bisphénol A, à partir de difluorodiphénylsulfone, d'un 1,4:3,6-dianhydrohexitol et de bisphénol A en tant que monomères mis à réagir ensemble dans le même milieu réactionnel (Belgacem et al., Des. Monomers Polym., 2016, 19, 248-255). Dans ces conditions, le polymère obtenu est un copolymère statistique dans lequel l'enchaînement des unités contenant le 1,4:3,6-dianhydrohexitol et le bisphénol A est aléatoire.

La demande US 2017/0240708 décrit également la synthèse de polyéthersulfones contenant un 1,4:3,6-dianhydrohexitol et du bisphénol A par un procédé similaire. Le polyéthersulfone obtenu est un copolymère statistique à base de bisphénol A et d'isosorbide.

Demeure toutefois et de manière générale, la volonté de l'homme du métier d'enrichir la bibliothèque de polymères de type polyéthersulfones obtenus à partir d'un composé biosourcé, dans une démarche d'économie des matériaux fossiles, au profit de matières premières biosourcées.

Il existe également un besoin de fournir des polymères du type polyéthersulfones, présentant des caractéristiques aptes à les utiliser dans la fabrication de membranes. Ces caractéristiques sont, par exemple, des masses moléculaires moyennes en nombre (Mn) élevées qui sont nécessaires à l'obtention de propriétés filmogènes. Ces polymères peuvent aussi présenter de manière avantageuse une hydrophilie importante : dans le cas d'une membrane, celle-ci va s'humidifier rapidement, ce qui conduit à une filtration rapide avec des débits et des rendements élevés. Enfin, ces polymères peuvent aussi présenter des propriétés de perméabilité, et notamment de sélectivité vis-à-vis de certains gaz et/ou liquides, qui peuvent s'avérer particulièrement intéressantes, dans des procédés de filtration membranaires.

### RÉSUMÉ DE L'INVENTION

La présente invention concerne un procédé de préparation d'un copolymère à blocs de type polyéthersulfone aromatique comprenant les étapes successives suivantes :
a) préparation d'un premier bloc de polymère ayant l'unité de répétition : 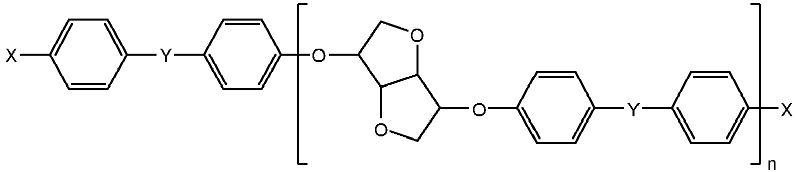
   de masse molaire moyenne en nombre Mₙ comprise entre 1 000 et 30 OOOg/mol et où n est un nombre entier supérieur à 1 et **X** est Cl ou F et **Y** est CO ou SO₂,
   la préparation dudit premier bloc consistant en la réaction entre un 1,4:3,6-dianhydrohexitol et un excès de 4,4'-dichlorodiphényle sulfone ou de 4,4'-difluorodiphényle sulfone ou de 4,4'-difluorodiphényle cétone ou de 4,4'-dichlorodiphényle cétone en présence d'une base dans un solvant organique,
b) préparation d'un deuxième bloc de polymère ayant l'unité de répétition : 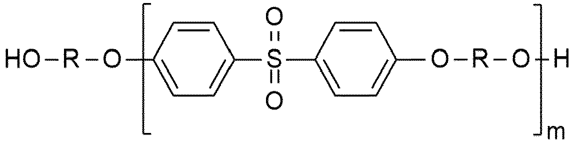
   de masse molaire moyenne en nombre Mₙ comprise entre 1 000 et 30 OOOg/mol et où m est un nombre entier supérieur à 1 et **R** provient d'un diol aromatique ou aliphatique,
   la préparation de ce deuxième bloc consistant en la réaction entre un diol aromatique ou aliphatique en excès ou en quantité stoechiométrique avec la 4,4'-dichlorodiphényle sulfone ou la 4,4'-difluorodiphényle sulfone en présence d'une base dans un solvant organique et optionnellement un co-solvant,
c) réaction entre le premier bloc et le deuxième bloc selon la copolymérisation en blocs en deux étapes successives ou la copolymérisation en blocs en deux étapes distinctes.

La « copolymérisation à blocs en deux étapes successives », signifie qu'à l'issue de la deuxième étape du procédé, le premier bloc et le second bloc sont présents dans le même milieu réactionnel. La troisième étape du procédé consiste à augmenter la température du milieu réactionnel comprenant le premier et le deuxième bloc de sorte que les deux blocs réagissent ensemble.

Dans la « copolymérisation à blocs en deux étapes distinctes », la troisième étape du procédé consiste à mettre le premier bloc de polymère obtenu à l'issue de la première étape du procédé en présence du deuxième bloc de polymère obtenu à l'issue de la deuxième étape du procédé de sorte que le premier bloc et le deuxième bloc réagissent ensemble.

L'invention concerne également un copolymère à blocs de type polyéthersulfone aromatique susceptible d'être obtenu par ledit procédé. Ce copolymère comprend les unités de répétition de la formule I : 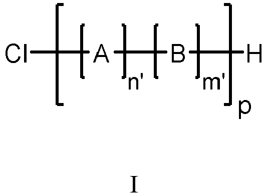 dans laquelle 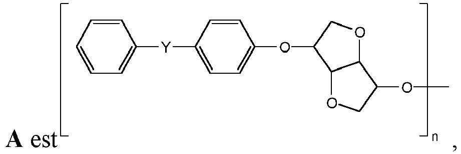 où Y est CO ou SO₂ et n est un nombre entier supérieur à 1, **B** est 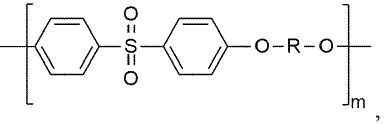 où R provient d'un diol aliphatique ou aromatique et m est un nombre entier supérieur à 1,
n' et **m'** sont chacun indépendamment l'un de l'autre un nombre entier supérieur à 1, le ratio molaire **n'**/**m'** est compris entre 1/99 et 99/1, et **p** est un nombre entier supérieur à 1.

Un autre objet de la présente invention concerne l'utilisation du copolymère à blocs susceptible d'être obtenu par le procédé selon l'invention pour la fabrication de membranes.

### DESCRIPTION DÉTAILLÉE

La présente invention concerne un procédé de préparation d'un copolymère à blocs de type polyéthersulfone aromatique comprenant les étapes successives suivantes :
a) préparation d'un premier bloc de polymère ayant l'unité de répétition : 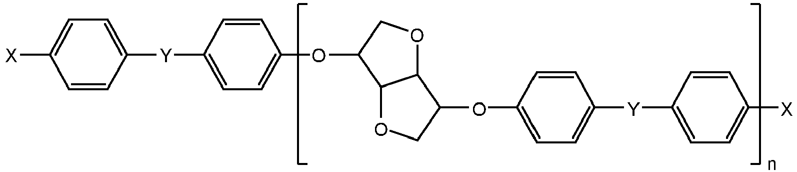
   de masse molaire moyenne en nombre Mₙ comprise entre 1000 et 30 OOOg/mol et où n est un nombre entier supérieur à 1, **X** est Cl ou F et **Y** est CO ou SO₂,
   la préparation dudit premier bloc consistant en la réaction entre un 1,4:3,6-dianhydrohexitol et un excès d'un composé bis-aromatique dihalogéné choisi parmi la 4,4'-dichlorodiphényle sulfone, la 4,4'-difluorodiphényle sulfone, la 4,4'-difluorodiphényle cétone et la 4,4'-dichlorodiphényle cétone en présence d'une base dans un solvant organique,
b) préparation d'un deuxième bloc de polymère ayant l'unité de répétition : 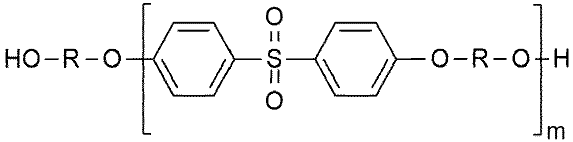
   de masse molaire moyenne en nombre Mₙ comprise entre 1 000 et 30 OOOg/mol et où m est un nombre entier supérieur à 1 et **R** provient d'un diol aromatique ou aliphatique,
   la préparation de ce deuxième bloc consistant en la réaction entre un diol aromatique ou aliphatique en excès ou en quantité stoechiométrique avec la 4,4'-dichlorodiphényle sulfone ou la 4,4'-difluorodiphényle sulfone en présence d'une base dans un solvant organique et optionnellement un co-solvant,
c) réaction entre le premier bloc et le deuxième bloc selon la copolymérisation en blocs en deux étapes successives ou la copolymérisation en blocs en deux étapes distinctes.

Par « 1,4:3,6-dianhydrohexitol », on entend au sens de la présente invention un composé hétérocyclique obtenu par double déshydratation d'un hexitol tel que le mannitol, le sorbitol et l'iditol. Les 1,4:3,6-dianhydrohexitols se présentent principalement sous la forme de stéréoisomères : l'isomannide, l'isosorbide et l'isoidide. Le 1,4:3,6-dianhydrohexitol est utilisé dans la présente invention en tant que monomère pour la formation du premier bloc de polymère. De préférence, le 1,4:3,6-dianhydrohexitol utilisé dans l'étape de préparation du premier bloc de polymère est l'isosorbide.

Pour le premier bloc, le dihalogéné aromatique est avantageusement choisi parmi les sulfones aromatiques dihalogénées ou les cétones aromatiques dihalogénées. Les dihalogénés aromatiques utilisés peuvent être la 4,4'-dichlorodiphényle sulfone, la 4,4'-difluorodiphényle sulfone, la 4,4'-dichlorodiphényle cétone et la 4,4'-difluorodiphényle cétone. De préférence, le dihalogéné aromatique utilisé dans l'étape de préparation du premier bloc de polymère est la 4,4'-dichlorodiphényle sulfone.

Pour le deuxième bloc, le diol est avantageusement choisi parmi les diols aromatiques et les diols aliphatiques. Les diols aromatiques préférés pour l'invention sont connus par l'homme du métier et correspondent avantageusement à la liste suivante : les dihydroxybenzènes, en particulier l'hydroquinone et le résorcinol ; les dihydroxynaphthalènes, en particulier le 1,5-dihydroxynaphthalène, le 1,6-dihydroxynaphthalène, le 1,7-dihydroxynaphthalène et le 2,7-dihydroxynaphthalène ; les dihydroxybiphényles, en particulier le 4,4'-biphénol et le 2,2'-biphénol, les biphényl éthers en particulier le bis(4-hydroxyphényle) éther et le bis(2-hydroxyphényle)éther ; les bisphénylpropanes, en particulier le 2,2-bis(4-hydroxyphényle)propane, 2,2-bis(3-méthyl-4-hydroxyphényle)propane et le 2,2-bis(3,5-diméthyl-4-hydroxyphényle)propane) ; les bisphénylméthanes, en particulier le bis(4-hydroxyphényl)méthane ; les bisphénylcyclohexanes, en particulier le bis(4-hydroxyphényle)-2,2,4-triméthylcyclohexane ; les bisphényles sulfones, en particulier le bis(4-hydroxyphényl)sulfone ;
les bisphényles sulfides, en particulier le bis(4-hydroxyphényle)sulfide ; les bisphényles cétones, en particulier le bis(4-hydroxyphényle)cétone ; les bisphénylhéxafluoropropanes, en particulier le 2,2-bis(3,5-diméthyl-4-hydroxyphéyle)héxafluoropropane ;et les bisphénylfluorènes, en particulier le 9,9-bis(4-hydroxyphényl)fluorène.

Le diol aliphatique peut être choisi parmi la liste suivante : le spiroglycol, le tricyclo[5.2.1.02,6]décane diméthanol (TCDDM), le 2,2,4,4-tétraméthyl-1,3-cyclobutandiol, le tétrahydrofuranediméthanol (THFDM), le furanediméthanol, le 1,2-cyclopentanediol, le 1,3-cyclopentanediol, le 1,2-cyclohexanediol, le 1,4-cyclohexanediol, le 1,2-cycloheptanediol, 1,5-naphtalènediol, le 2,7-naphtalènediol, le 1,4-naphtalènediol, le 2,3-naphtalènediol, le 2-méthyl-1,4-naphtalènediol, le 1,4,-benzylediol, l'octahydronaphtalène-4,8-diol, le dioxane glycol (DOG), les norbornane diols, les adamanthanediols, les pentacyclopentadecane diméthanols. De préférence, le diol utilisé dans l'étape de préparation du deuxième bloc de polymère est le bisphénol A.

De manière avantageuse, le procédé de l'invention permet de contrôler le ratio molaire entre le 1,4:3,6-dianhydrohexitol et le bisphénol A de manière à obtenir des polymères présentant une grande hydrophilie et/ou de bonnes propriétés de perméabilité.

La première étape du procédé consiste donc à préparer un premier bloc de polymère ayant l'unité de répétition : 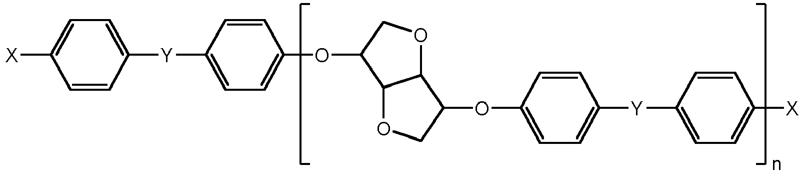
de masse molaire moyenne en nombre Mₙ comprise entre 1000 et 30 OOOg/mol et où n est un nombre entier supérieur à 1, **X** est Cl ou F et **Y** est CO ou SO₂
la préparation dudit premier bloc consistant en la réaction entre un 1,4:3,6-dianhydrohexitol et un excès de 4,4'-dichlorodiphényle sulfone ou de 4,4'-difluorodiphényle sulfone ou de 4,4'-difluorodiphényle cétone ou de 4,4'-dichlorodiphényle cétone en présence d'une base dans un solvant organique.

La réaction entre le 1,4:3,6-dianhydrohexitol et la 4,4'-dichlorodiphényle ou la 4,4'-difluorodiphényle sulfone ou la 4,4'-difluorodiphényle cétone ou la 4,4'-dichlorodiphényle cétone est mise en oeuvre en présence d'une base dans un solvant organique et permet de former le premier bloc aux extrémités halogénées.

La base est avantageusement choisie parmi les sels de métaux alcalins. Les bases peuvent être choisies parmi la liste suivante : le carbonate de potassium (K₂CO₃), le carbonate de sodium (Na₂CO₃), le carbonate de césium (CsCO₃), le carbonate de lithium (LiCO₃), le tert-butoxyde de potassium, le bis(triméthyl)silanolate de potassium, le méthanolate de sodium, le méthanolate de potassium, le bis(triméthylsilyl)amide de potassium, l'hydroxyde de sodium, l'hydroxyde de potassium ou un mélange de ceux-ci. De préférence, la base est choisie parmi le carbonate de potassium (K₂CO₃) et le carbonate de sodium (Na₂CO₃).

Avantageusement, la proportion de base est comprise entre 1 et 3 équivalents en mole par rapport à la quantité de 1,4:3,6-dianhydrohexitol. De préférence, la proportion de base est d'environ 2 équivalents en mole par rapport à la quantité de 1,4:3,6-dianhydrohexitol.

Le solvant organique de l'étape de préparation du premier bloc de polymère est avantageusement choisi parmi les solvants polaires aprotiques ou un mélange de solvants polaires aprotiques. Par « solvant polaire aprotique », on entend au sens de la présente invention un solvant possédant un moment dipolaire sans atome d'hydrogène acide, c'est-à-dire lié à un hétéroatome. De préférence, le solvant est choisi parmi les solvants polaires aprotiques contenant un soufre. Parmi les solvants polaires aprotiques contenant un soufre, de préférence le diméthylsulfoxyde, le sulfolane, le diméthylsulfone, le diphényle sulfone, le diéthyl sulfoxyde, le diéthyl sulfone, le diisopropyl sulfone, le tétrahydrothiophène-1-monoxyde et des mélanges de ceux-ci. Les solvants polaires aprotiques contenant un azote comme le diméthylacétamide, le diméthylformamide, la N-méthyl-2-pyrrolidone, le N-Cyclohexyl-2-pyrrolidone ou un mélange de ceux-ci, peuvent être utilisés dans l'invention. De préférence encore, les solvants sont le diméthylsulfoxyde ou la N-méthyl-2-pyrrolidone.

Dans un mode de réalisation particulièrement préféré, le 1,4:3,6-dianhydrohexitol utilisé dans l'étape de préparation du premier bloc de polymère est l'isosorbide.

L'isosorbide utilisé pour la préparation du premier bloc peut se présenter sous forme solide, notamment sous forme de poudre, granulés ou sous forme d'écailles, ou encore sous forme fondu. De préférence, l'isosorbide se présente sous forme solide.

La réaction entre le 1,4:3,6-dianhydrohexitol et la 4,4'-dichlorodiphényle sulfone ou la 4,4'-difluorodiphényle sulfone ou la 4,4'-difluorodiphényle cétone ou la 4,4'-dichlorodiphényle cétone est avantageusement mise en oeuvre en présence d'un excès molaire de 4,4'-dichlorodiphényle sulfone. En d'autres termes, la quantité de 4,4'-dichlorodiphényle sulfone est supérieure à 1 équivalent en mole par rapport à la quantité de 1,4:3,6-dianhydrohexitol. De préférence, la quantité de 4,4'-dichlorodiphényle sulfone est comprise entre 1,01 et 1,5 équivalents, de préférence encore entre 1,05 et 1,25 équivalents en mole par rapport à la quantité de 1,4:3,6-dianhydrohexitol. Encore plus préférentiellement, la quantité de 4,4'-dichlorodiphényle sulfone est d'environ 1,076 équivalents en mole par rapport à la quantité de 1,4:3,6-dianhydrohexitol.

Ainsi, le premier bloc de polymère est formé par réaction entre le 1,4:3,6-dianhydrohexitol et la 4,4'-dichlorodiphényle ou la 4,4'-difluorodiphényle sulfone ou la 4,4'-difluorodiphényle cétone ou la 4,4'-dichlorodiphényle cétone sulfone en tant que monomères. Avantageusement, la proportion totale en monomères, c'est-à-dire la somme de la quantité de 1,4:3,6-dianhydrohexitol et de la quantité de 4,4'-dichlorodiphényle sulfone, est comprise entre 10% et 50%, de préférence entre 20% et 40% en masse par rapport à la somme de la masse du solvant et de la masse des monomères. De préférence encore, la proportion en monomères est d'environ 30% en masse par rapport à la somme de la masse du solvant et de la masse des monomères.

Afin de démarrer la réaction entre le 1,4:3,6-dianhydrohexitol et le composé bis-aromatique dihalogéné pour former le premier bloc de polymère, le milieu réactionnel comprenant le 1,4:3,6-dianhydrohexitol et le composé bis-aromatique dihalogéné est chauffé. Avantageusement, l'étape de préparation du premier bloc de polymère est réalisée à une température comprise entre 160°C et 250°C, de préférence entre 180°C et 250°C, de préférence entre 190°C et 240°C, de préférence encore entre 200°C et 230°C, pendant une durée comprise entre 1 heure et 24 heures, de préférence entre 2 heures et 18 heures, de préférence encore entre 3 heures et 12 heures. Encore plus préférentiellement, l'étape de préparation du premier bloc de polymère est réalisée à une température d'environ 210°C, pendant une durée d'environ 7 heures et trente minutes.

Après réaction, la température du milieu réactionnel est abaissée à une température comprise entre 90°C et 150°C, de préférence entre 100°C et 140°C, de préférence encore à une température d'environ 120°C afin de stopper la réaction.

La deuxième étape du procédé selon l'invention consiste à préparer un deuxième bloc de polymère ayant l'unité de répétition : 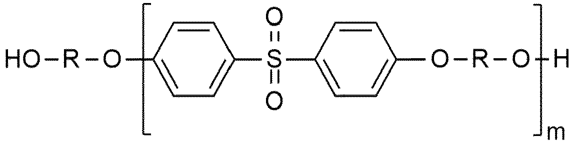
de masse molaire moyenne en nombre Mₙ comprise entre 1 000 et 30 OOOg/mol et où m est un nombre entier compris supérieur à 1 et R provient d'un diol aromatique ou aliphatique,
la préparation de ce deuxième bloc consistant en la réaction entre un diol aromatique ou aliphatique en excès ou en quantité stoechiométrique avec la 4,4'-dichlorodiphényle sulfone ou la 4,4'-difluorodiphényle sulfone en présence d'une base dans un solvant organique et optionnellement un co-solvant,

Selon un premier mode de réalisation particulier, la préparation du deuxième bloc de polymère est réalisée dans le même milieu réactionnel que celui utilisé pour la préparation du premier bloc de polymère. On parle de « copolymérisation à blocs en deux étapes successives ». Ainsi, après abaissement de la température du milieu réactionnel pour la préparation du premier bloc de polymère, le bisphénol A et la 4,4'-dichlorodiphényle sulfone ou la 4,4'-difluorodiphényle sulfone sont ajoutés avec des quantités molaires connues de l'homme du métier pour former le deuxième bloc de polymère. Le ratio molaire entre le bisphénol A et la 4,4'-dichlorodiphényle sulfone ou la 4,4'-difluorodiphényle sulfone est préférentiellement entre 1 et 1,2, en particulier entre 1 et 1,1 et encore plus préférentiellement entre 1 et 1,05. Du fait de leurs faibles masses molaires, la détermination de la longueur d'oligomères précurseurs est souvent sujette à des erreurs, ce qui rend impossible le respect d'une stoechiométrie stricte des oligomères pour la synthèse du copolymère à bloc en deux étapes distinctes. D'après le brevet US8759458B2 il est connu que la copolymérisation en deux étapes successives a l'avantage de pouvoir contrôler la stoechiométrie et donc d'obtenir de plus hautes masses molaires.

La réaction entre le bisphénol A et la 4,4'-dichlorodiphényle sulfone ou la 4,4'-difluorodiphényle sulfone est mise en oeuvre en présence d'une base et dans un solvant organique ainsi qu'un co-solvant et permet de former le deuxième bloc aux extrémités portant un groupe hydroxyle.

La quantité totale de bisphénol A formant le deuxième bloc peut être variée par rapport à la quantité de 1,4:3,6-dianhydrohexitol utilisée pour la formation du premier bloc lors de la première étape du procédé. Ainsi, l'étape de préparation du deuxième bloc de polymère est avantageusement réalisée avec un ratio molaire 1,4:3,6-dianhydrohexitol/bisphénol A compris entre 1/99 et 99/1, de préférence entre 10/90 et 90/10, de préférence encore entre 20/80 et 80/20, de préférence encore entre 40/60 et 60/40. Encore plus préférentiellement, le ratio molaire 1,4:3,6-dianhydrohexitol/bisphénol A est d'environ 50/50.

La base est avantageusement choisie parmi les sels de métaux alcalins. Les bases peuvent être choisies parmi la liste suivante : le carbonate de potassium (K₂CO₃), le carbonate de sodium (Na₂CO₃), le carbonate de césium (CsCO₃), le carbonate de lithium (LiCO₃), le tert-butoxyde de potassium, le bis(triméthyl)silanolate de potassium, le méthanolate de sodium, le méthanolate de potassium, le bis(triméthylsilyl)amide de potassium, l'hydroxyde de sodium, l'hydroxyde de potassium ou un mélange de ceux-ci. De préférence, la base est choisie parmi le carbonate de potassium (K₂CO₃) et le carbonate de sodium (Na₂CO₃).

Avantageusement, la proportion de base est comprise entre 1 et 3 équivalents en mole par rapport à la quantité de bisphénol A. De préférence, la proportion de base est d'environ 2 équivalents en mole par rapport à la quantité de bisphénol A.

Le solvant organique de l'étape de préparation du deuxième bloc de polymère est avantageusement choisi parmi les solvants polaires aprotiques. Par « solvant polaire aprotique », on entend au sens de la présente invention un solvant possédant un moment dipolaire sans atome d'hydrogène acide, c'est-à-dire lié à un hétéroatome. De préférence, le solvant est choisi parmi ceux contenant un soufre. Parmi les solvants polaires aprotiques contenant un soufre, de préférence le diméthylsulfoxyde, le sulfolane, le diméthylsuflone, le diphényle sulfone, le diéthyl sulfoxyde, le diéthyl sulfone, le diisopropyl sulfone, le tétrahydrothiophène-1-monoxyde et des mélanges de ceux-ci. Les solvants polaires aprotiques contenant un azote comme le diméthylacétamide, le diméthylformamide, la N-méthyl-2-pyrrolidone, le N-Cyclohexyl-2-pyrrolidone ou un mélange de ceux-ci, sont utilisés dans l'invention. De préférence encore, les solvants sont le diméthylsulfoxyde ou la N-méthyl-2-pyrrolidone.

Le co-solvant est avantageusement choisi parmi les solvants apolaires tels que le n-hexane, le cyclohexane, le benzène, le toluène, le xylène. De préférence, le co-solvant est le toluène.

De manière avantageuse, le ratio molaire solvant polaire aprotique/co-solvant est compris entre 0,1 et 10, de préférence entre 0,5 et 5, de préférence encore entre 1 et 2. Encore plus préférentiellement, le ratio molaire solvant polaire aprotique/co-solvant est d'environ 1,5.

Après ajout de bisphénol A et de 4,4'-dichlorodiphényle sulfone ou de 4,4'-difluorodiphényle sulfone, le milieu réactionnel est maintenu à une température comprise entre 90°C et 150°C, de préférence entre 100°C et 140°C, de préférence encore à une température d'environ 120°C afin de former le deuxième bloc de polymère, pendant une durée comprise entre 1 heure et 24 heures, de préférence entre 6 heures et 20 heures, de préférence encore entre 12 heures et 18 heures, encore plus préférentiellement, pendant une durée d'environ 15 heures.

Selon un deuxième mode de réalisation particulier, la préparation du deuxième bloc de polymère est réalisée dans un milieu différent de celui utilisé pour la préparation du premier bloc de polymère. On parle de « copolymérisation à blocs en deux étapes distinctes ». Ainsi, le bisphénol A et la 4,4'-dichlorodiphényle sulfone ou la 4,4'-difluorodiphényle sulfone en tant que monomères sont mis à réagir en présence d'une base dans un solvant polaire aprotique pour former le deuxième bloc de polymère.

La troisième étape du procédé selon l'invention consiste à faire réagir le premier bloc de polymère avec le deuxième bloc de polymère afin d'obtenir le copolymère à blocs.

Selon un premier mode de réalisation de l'invention, c'est-à-dire, la « copolymérisation à blocs en deux étapes successives », à l'issue de la deuxième étape du procédé, le premier bloc et le second bloc sont présents dans le même milieu réactionnel. La troisième étape du procédé consiste à augmenter la température du milieu réactionnel comprenant le premier et le deuxième bloc de sorte que les deux blocs réagissent ensemble.

Avantageusement, l'étape de réaction entre le premier bloc et le deuxième bloc est réalisée à une température comprise entre 150°C et 200°C, pendant une durée comprise entre 1 heure et 24 heures.

Au cours de la réaction, la viscosité du milieu réactionnel augmente signifiant que le premier et le deuxième blocs réagissent entre eux.

Selon un deuxième mode de réalisation de l'invention, c'est-à-dire, la « copolymérisation à blocs en deux étapes distinctes », la troisième étape du procédé consiste à mettre le premier bloc de polymère obtenu à l'issue de la première étape du procédé en présence du deuxième bloc de polymère obtenu à l'issue de la deuxième étape du procédé de sorte que le premier bloc et le deuxième bloc réagissent ensemble.

Une fois le premier bloc et le deuxième bloc mélangés, l'étape de réaction entre le premier bloc et le deuxième bloc est réalisée à une température comprise entre 150°C et 200°C.

A l'issue de la réaction entre le premier et le deuxième bloc, le copolymère à blocs obtenu peut être récupéré par les techniques connues de l'homme du métier, comme par exemple la précipitation du milieu réactionnel dans un grand volume d'eau, environ 10 fois le volume du milieu réactionnel. Le copolymère à blocs peut ensuite être séché selon les techniques connues de l'homme du métier comme par exemple dans une étuve à 80°C pendant 12 heures.

Ainsi, l'invention concerne également un copolymère à blocs de type polyéthersulfone aromatique susceptible d'être obtenu par le procédé selon l'invention.

Ce copolymère comprend les unités de répétition de la formule I : 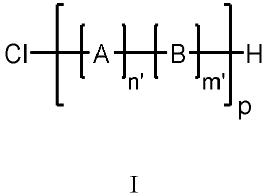 dans laquelle 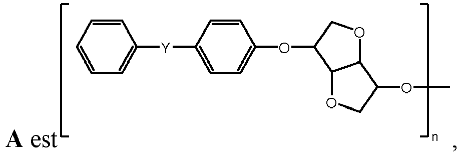 où **Y** est SO₂ ou CO et n est un nombre entier supérieur à 1, **B** est 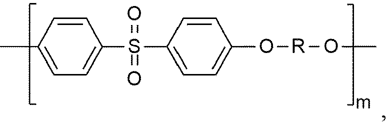 où **R** provient d'un diol aliphatique ou aromatique et m est un nombre entier supérieur à 1,
n' et **m'** sont chacun indépendamment l'un de l'autre un nombre entier supérieur à 1, le ratio molaire **n'**/**m'** est compris entre 1/99 et 99/1, et **p** est un nombre entier supérieur à 1.

Un copolymère à blocs particulièrement préféré de la formule I est celui dans lequel **A** est 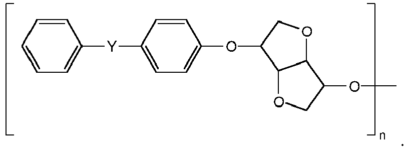 où **Y** est SO₂ ou CO et n est un nombre entier supérieur à 1, et **B** est 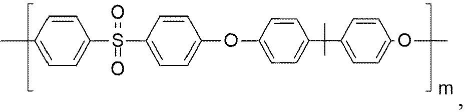 où **R** provient d'un diol aliphatique ou aromatique et m est un nombre entier supérieur à 1.

De manière avantageuse, le copolymère à blocs susceptible d'être obtenu par le procédé selon l'invention possède une masse moléculaire moyenne en nombre Mₙ supérieure à 30 000 g/mol.

Le copolymère à blocs susceptible d'être obtenu par le procédé selon l'invention présente une température de transition vitreuse supérieure à 140°C, de préférence d'environ 210°C.

Un autre objet de la présente invention concerne l'utilisation du copolymère à blocs selon l'invention pour la fabrication de membranes, de pièces manufacturées et de revêtement.

Des membranes peuvent être fabriquées à partir du copolymère à blocs de l'invention selon les techniques connues de l'homme du métier.

En particulier, les membranes obtenues avec le copolymère à blocs selon l'invention présentent des propriétés d'hydrophilie et de perméabilité aux gaz intéressantes. Les membranes peuvent se présenter sous forme de films poreux ou non poreux. Les membranes peuvent être manufacturées sous forme de monofilament ou de fibres creuses. La composition du copolymère à blocs selon l'invention peut être utilisé dans les milieux aqueux, incluant les fluides corporels. Le copolymère à bloc selon l'invention est biocompatible et peut donc être utilisé sous forme de membrane dans le milieu médical comme pour les hémodialyses ou dans le milieu de la consommation (alimentaire et boissons), dans le milieu du traitement des eaux usées. Les membranes poreuses sous forme de tubes ou de fibres creuses peuvent présenter différentes tailles de pores connues de l'homme du métier en fonction de son application (microfiltration, ultrafiltration, nanofiltration, osmose inverse). Les performances des membranes aqueuses obtenues avec le copolymère à bloc selon l'invention peuvent être améliorées par les techniques connues de l'homme du métier, en particulier l'utilisation de monomères sulfonés ou le post-traitement des membranes par sulfonation ou par traitement de surface pour éviter l'encrassement.

Les membranes en phase gazeuse peuvent servir à la production d'azote à partir de la séparation du mélange azote, oxygène de l'air, la production du méthane à partir de la séparation du méthane et du CO₂. Les performances des membranes gazeuses obtenues avec le copolymère à bloc selon l'invention peuvent être améliorées par les techniques connues de l'homme du métier, en particulier, l'utilisation de monomères encombrés ou l'ajout d'additifs comme les bisphénols substitués, les naphtalènes ou les fluorènes ou encore l'utilisation de composés labiles thermiquement pour former des pores.

Les membranes sous forme de films ou de plaques peuvent être utilisées pour l'optique ou pour l'emballage.

Des pièces moulées peuvent être fabriquées à partir du copolymère à blocs de l'invention selon les techniques connues de l'homme du métier. Le moulage à injection du copolymère à blocs selon l'invention peut conduire à la production de pièces utilisées dans le secteur de la santé, avec des applications dentaires pour remplacer les métaux, le verre et d'autres ustensiles jetables ou réutilisables, mais aussi dans le secteur aéronautique, électronique et automobile.

Un autre objet de cette invention est l'utilisation du copolymère à blocs comme résine de revêtement des métaux pour prévenir de la corrosion. Le revêtement à partir du copolymère à blocs selon l'invention peut être appliqué sur l'acier, l'aluminium, le cuivre, métaux utilisés dans le secteur de la consommation (alimentation et boisson), le secteur de la marine avec les coques des bateaux, les secteurs de l'aérospatial, de l'automobile, électrique avec les câbles et électronique avec les circuits. La résine du copolymère à blocs selon l'invention peut aussi être appliquée à d'autres substrats comme le verre ou la fibre de carbone pour former un composite après évaporation du solvant de la résine. Les composites formés à partir de la résine du copolymère à blocs selon l'invention peuvent être utilisés dans le domaine aérospatial et automobile pour remplacer les pièces métalliques.

L'invention sera encore mieux comprise à la lecture des figures et exemples qui suivent, lesquels se veulent purement illustratifs et ne limitent en rien la portée de la protection.

### FIGURES

**Figure 1****.** Photographie d'une membrane obtenue avec le copolymère à blocs selon l'invention exemple 1
**Figure 2****.** Calorimétrie différentielle à balayage réalisée à 10°C/min de 20°C à 300°C

### EXEMPLES

**Exemple 1.** Préparation d'un copolymère à blocs selon l'invention dans lequel le ratio 1,4:3,6-dianhydrohexitol/bisphénol A est de 50/50.

Dans un tricol équipé d'un col de cygne, d'une pâle d'agitation et d'une arrivée d'azote sont solubilisés 0,7313 g (5 mmol, 1 éq.) d'isosorbide, 1,5606 g (5,38 mmol, 1,076 éq.) de 4,4'-dichlorodiphényle sulfone (DCDPS) et 1,3961 g (10 mmol, 2 éq.) de K₂CO₃ dans 5,31 g de DMSO. Un réfrigérant est monté pour faire condenser le DMSO. Le ballon est chauffé à 210°C avec un bain d'huile pendant 7 h 30. La température est ensuite ramenée à 120°C.

Puis, sont ajoutés, 1,1533 g (5 mmol, 1éq.) de bisphénol A (BPA), 1,4509g (5 mmol, 1éq.) de 4,4'-dichlorodiphényle sulfone (DCDPS) et 1,3963 g (10 mmol, 2 éq.) de K₂CO₃ (99%) dans 12,71 g de NMP et 8,47 g de toluène. Un Dean-Stark est monté pour former l'azéotrope eau-toluène. Le milieu est laissé à 120°C pendant 15 h puis 3 h 30 à 160°C et enfin 4 h à 180°C.

Le milieu réactionnel est versé dans de l'eau provoquant la précipitation du polymère qui est ensuite filtré puis séché à 80°C pendant 16h. Le polymère est ensuite dissout dans 20 mL de DMSO et reprécipité dans un grand volume d'eau, filtré et séché 16h sous vide à 40°C.

### Contre-exemple 2.

Cet exemple est un polyéthersulfone acheté chez ACROS ORGANICS 178910050 sous forme de granulés transparents. Le produit n'a subi aucun traitement. Ce produit est un polyéthersulfone exempt d'isosorbide mais contenant du bisphénol A.

### Contre-exemple 3.

Cet exemple comparatif correspond à l'exemple n°5 du brevet WO2014/072473 de SOLVAY Speciality Polymers, USA, réalisé dans le DMSO comme solvant réactionnel. Il s'agit d'un homopolymère de polyéthersulfone à partir d'isosorbide.

### Contre-exemple 4.

Cet exemple comparatif correspond à l'exemple n°5 du brevet WO2016/032179 de SAMYANG Corporation, réalisé dans le DMSO comme solvant réactionnel sans chlorobenzène comme co-solvant. Il s'agit d'un copolymère statistique de polyéthersulfone à base d'isosorbide et de bisphénol A avec le ratio molaire isosorbide/bisphénol A de 50/50.

### Contre-exemple 5.

Cet exemple correspond à un mélange du contre-exemple 2 avec le contre-exemple 3 solubilisés dans le DMSO à 20%m puis précipité dans l'eau. Le mélange est ensuite séché à 80°C pendant 16h.

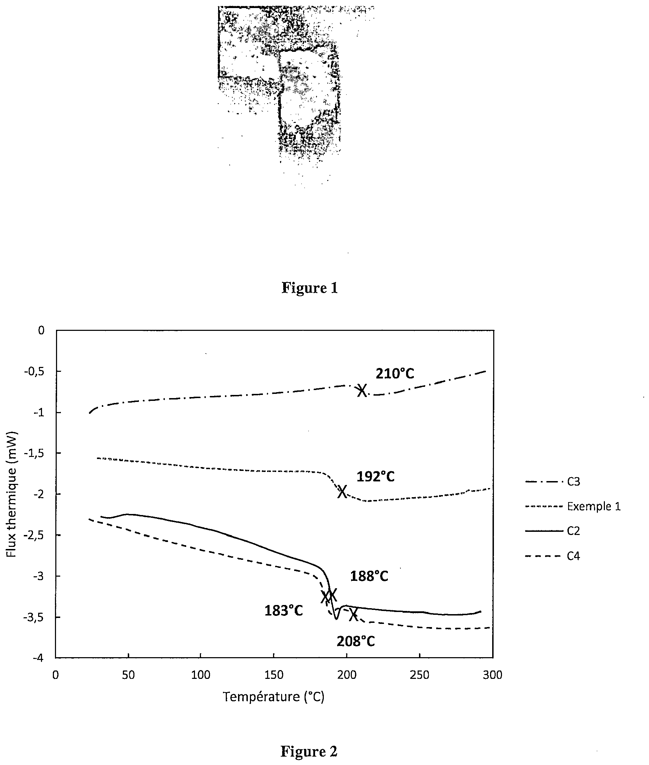

Les caractérisations appliquées aux exemples sont décrites ci-dessous:
- Résonance Magnétique Nucléaire (RMN).Les spectres 100MHz ¹³C ont été réalisés sur un Brüker Ascend^{™} 400 dans un tube en verre de 5 mm dans le DMSO- d₆.
- Calorimétrie différentielle à balayage (DSC) (fig.2).L'analyse de calorimétrie différentielle à balayage a été réalisée sur une DSC-Q5000 SA, TA Instruments, USA avec un débit de 50ml/min à l'azote à 10°C/min ou 20°C/min de 20°C à 300°C et dans un creuset en aluminium percé.
- Chromatographie d'Exclusion Stérique (SEC) : L'analyse des masses molaires a été réalisée par chromatographie d'exclusion stérique avec une colonne Agilent PLgel 5µm dans le DMF/LiBr à 50°C pendant 35min avec un débit de 0,5mL/min et en calibration PS.

**Tableau 1.**

| **Analyses** | | | | |
|---|---|---|---|---|
| **Exemples** | **Mn¹ (g/mol)** | **Ip** | **Tg¹ (°C)** | **Capacité à former des films** |
| **Exemple 1** | 80 000 | 1,6 | 200 | Oui |
| **Contre-exemple 2** | 90 000 | 1,6 | 190 | Oui |
| **Contre-exemple 3** | 34 000 | 1,2 | 200 | Non |
| **Contre-exemple 4** | 30 000 | 1,1 | 150 | Non |

| | | | | |
|---|---|---|---|---|
| ¹ : **DSC** : Cycle chauffe/refroidissement/chauffe de 20°C à 300°C à 20°C/min, creuset en aluminium percé | | | | |

La RMN ¹³C justifie un taux d'incorporation de 56% d'isosorbide par rapport au taux total de diols incorporés.

Avec la SEC, une seule courbe gaussienne de 80 000 g/mol en calibration polystyrène est observée. La masse molaire Mn du copolymère à bloc selon l'invention exemple 1 est plus élevée que celle de l'homopolymère à base d'isosorbide contre-exemple 3 et que celle du copolymère statistique isosorbide/bisphénol A 50/50 contre-exemple 4, respectivement de 34 000 et 30 OOOg/mol. L'analyse DSC (figure 2) montre que le copolymère à blocs selon l'invention exemple 1 possède une seule Tg à 192°C. Le mélange de l'homopolymère à base d'isosorbide contre-exemple 3 (C3 à la figure 2) et du PES commercial contre-exemple 2 (C2 à la figure 2) présente 2 Tg à 183°C et 208°C (contre-exemple 5 ; C4 à la figure 2). Ces deux analyses sont en accord avec le caractère bloc du polymère de l'invention et dément l'hypothèse de la formation de deux homopolymères, l'un à base d'isosorbide et l'autre à base de bisphénol A.

De manière particulièrement avantageuse, le copolymère selon l'invention présente une masse moléculaire moyenne comparable à celle de la référence du marché. Il s'agit d'une masse élevée, notamment en ce sens qu'elle est supérieure à 50 000 g/mol, et rend donc apte ledit copolymère à être utilisé pour la fabrication de membranes.

### Préparation d'une membrane

Une membrane peut être préparée à partir d'une solution du polymère à 20% m dans la NMP coulée sur une plaque en verre. Le solvant est ensuite évaporé à l'aide du cycle thermique suivant : 70°C pendant 2 h, 120°C pendant 1 h, 150°C pendant 1 h et 200°C pendant 1 h. Après la cuisson une membrane marron transparente est obtenue pour l'exemple 1 (fig. 1). Une membrane est aussi obtenue avec le contre-exemple 2.

Le copolymère de l'invention est filmogène contrairement aux contre-exemples 3 et 4 de la littérature.

Les caractérisations appliquées aux deux membranes sont décrites ci-dessous:

### Angle de contact

L'angle de contact a été mesuré avec l'eau et le diiodométhane selon le modèle de Owens, sWendt, Rabel et Kaelble.

### Sorption Dynamique

La mesure de reprise en eau a été réalisée avec un appareil de Sorption Dynamique de Vapeur (DVS Q-5000 SA, TA Instruments) à la pression atmosphérique et à l'isotherme de 21°C avec un cycle sorption/désorption de 0 à 90% d'humidité.

### Perméabilité

Les expériences sont réalisées à température ambiante. La manipulation consiste à insérer le film à étudier dans la cellule de perméation. Après une désorption sous vide secondaire de 16h, l'expérience de perméation consiste à imposer une pression (3 bar) d'un gaz choisi dans le compartiment amont de la cellule et à mesurer la remontée de pression dans le compartiment aval de la cellule. La perméabilité est calculée à partir de la pente de la droite pression en fonction du temps dans le régime stationnaire, corrigée du vide statique si nécessaire.

**Tableau 2. Analyses obtenues sur les membranes**

| *Propriétés d'hydrophilie* | | | | | |
|---|---|---|---|---|---|
| | **Angle de contact H₂O (°)** | | **Sorption à 50% (g d'eau/g échantillon)** | | |
| **Exemple 1** | 89,03 | | 0,89% | | |
| **Contre-exemple 2** | 89,20 | | 0,39% | | |

| *Propriétés de perméabilité* | | | | | |
|---|---|---|---|---|---|
| | **P(He) (Barrer)** | **P(CO₂) (Barrer)** | **P(O₂) (Barrer)** | **Sélectivité He/CO₂** | **Sélectivité CO₂/O₂** |
| **Contre-exemple 2** | 12,4 | 6,1 | 2,65 | 2,03 | 2,30 |
| **Exemple 1** | 8,3 | 2,93 | 0,5 | 2,83 | 5,86 |

En conclusion de ces analyses, la sélectivité pour certains gaz est améliorée. Par exemple, de manière particulièrement intéressante et discriminante la sélectivité CO₂/O₂ passe de 2,30 pour le contre-exemple 2 à 5,86 pour l'exemple 1. De manière encore plus significative, et encore plus avantageuse, le caractère hydrophile est bien plus important pour le produit selon l'invention : l'absorption d'eau est plus que 2 fois supérieure à celle observée pour le produit commercial. Cette propriété est particulièrement avantageuse pour une membrane, dont la capacité à s'hydrater rapidement va conditionner son rendement et son efficacité.

## Revendications

1. Procédé de préparation d'un copolymère à blocs de type polyéther aromatique comprenant les étapes successives suivantes :
a) préparation d'un premier bloc de polymère ayant l'unité de répétition : 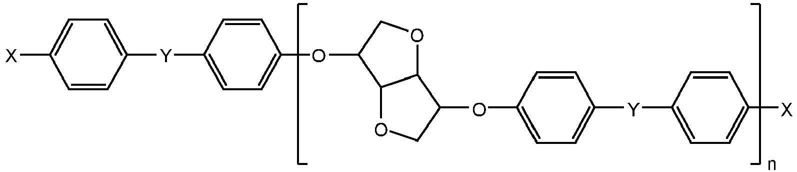
de masse molaire moyenne en nombre Mₙ comprise entre 1000 et 30 OOOg/mol et où n est un nombre entier supérieur à 1, **X** est Cl ou F et **Y** est CO ou SO₂,
la préparation dudit premier bloc consistant en la réaction entre un 1,4:3,6-dianhydrohexitol et un excès d'un composé bis-aromatique halogéné choisi parmi la 4,4'-dichlorodiphényle sulfone, la 4,4'-difluorodiphényle sulfone, la 4,4'-difluorodiphényle cétone et la 4,4'-dichlorodiphényle cétone en présence d'une base dans un solvant organique,
b) préparation d'un deuxième bloc de polymère ayant l'unité de répétition : 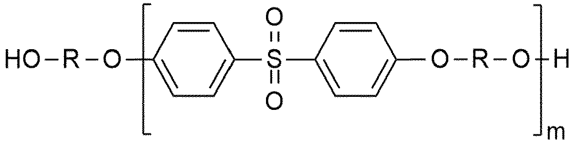
de masse molaire moyenne en nombre Mₙ comprise entre 1 000 et 30 OOOg/mol et où **m** est un nombre entier compris supérieur à 1 et **R** provient d'un diol aromatique ou aliphatique,
la préparation de ce deuxième bloc consistant en la réaction entre un diol aromatique ou aliphatique en excès ou en quantité stoechiométrique avec la 4,4'-dichlorodiphényle sulfone ou la 4,4'-difluorodiphényle sulfone en présence d'une base dans un solvant organique et optionnellement un co-solvant,
c) réaction entre le premier bloc et le deuxième bloc selon la copolymérisation en blocs en deux étapes successives ou la copolymérisation en blocs en deux étapes distinctes.

2. Procédé selon la revendication 1, **caractérisé en ce que** le solvant organique de l'étape de préparation du premier bloc de polymère est un solvant aprotique polaire.

3. Procédé selon l'une quelconque des revendications précédentes, **caractérisé en ce que** le 1,4:3,6-dianhydrohexitol utilisé dans l'étape de préparation du premier bloc de polymère est l'isosorbide.

4. Procédé selon l'une quelconque des revendications précédentes, **caractérisé en ce que** la proportion en monomères est comprise entre 10% et 50% en masse par rapport à la somme de la masse du solvant et de la masse des monomères.

5. Procédé selon l'une quelconque des revendications précédentes, **caractérisé en ce que** l'étape de préparation du premier bloc de polymère est réalisée à une température comprise entre 160°C et 250°C.

6. Procédé selon l'une quelconque des revendications précédentes, **caractérisé en ce que** la préparation du premier bloc de polymère et la préparation du deuxième bloc de polymère sont réalisées dans le même milieu réactionnel.

7. Procédé selon l'une quelconque des revendications précédentes, **caractérisé en ce que** l'étape de préparation du deuxième bloc est réalisée avec un ratio molaire 1,4:3,6-dianhydrohexitol/bisphénol A compris entre 1/99 et 99/1.

8. Procédé selon l'une quelconque des revendications précédentes, **caractérisé en ce que** le solvant organique de l'étape de préparation du deuxième bloc de polymère est un solvant polaire aprotique.

9. Procédé selon l'une quelconque des revendications précédentes, **caractérisé en ce que** le ratio molaire solvant polaire aprotique/co-solvant est compris entre 0,1 et 10.

10. Procédé selon l'une quelconque des revendications précédentes, **caractérisé en ce que** l'étape de préparation du deuxième bloc de polymère est réalisée à une température comprise entre 90°C et 150°C.

11. Procédé selon l'une quelconque des revendications précédentes, **caractérisé en ce que** l'étape de réaction entre le premier bloc et le deuxième bloc est réalisée à une température comprise entre 150°C et 200°C.

12. Copolymère à blocs de type polyéther aromatique comprenant les unités de répétition de la formule I : 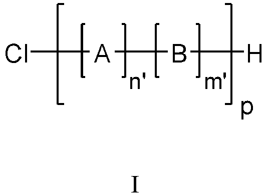 dans laquelle 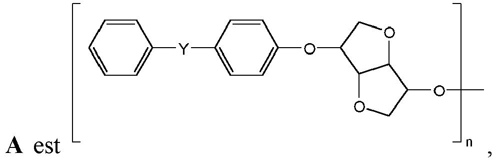 où Y est CO ou SO₂ et n est un nombre entier supérieur à 1, B est 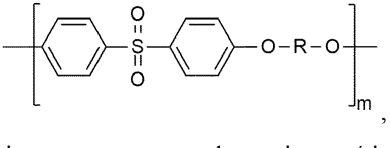 où R provient d'un diol aliphatique ou aromatique et m est un nombre entier supérieur à 1,
n' et **m'** sont chacun indépendemment l'un de l'autre un nombre entier supérieur à 1, le ratio molaire **n'**/**m'** est compris entre 1/99 et 99/1, et **p** est un nombre entier supérieur à 1.

13. Copolymère à blocs selon la revendication 12 dans lequel la masse moléculaire moyenne est supérieure à 30 000 g/mol.

14. Utilisation d'un copolymère à blocs susceptible d'être obtenu par le procédé selon l'une des revendications 1 à 11 ou du copolymère selon l'une de srevendications 12 ou 13 pour la fabrication de membranes.

## Patentansprüche

1. Verfahren zur Herstellung eines Blockcopolymers vom Typ aromatischer Polyether, umfassend die folgenden aufeinanderfolgenden Schritte:
a) Herstellung eines ersten Polymerblocks mit der Wiederholungseinheit: 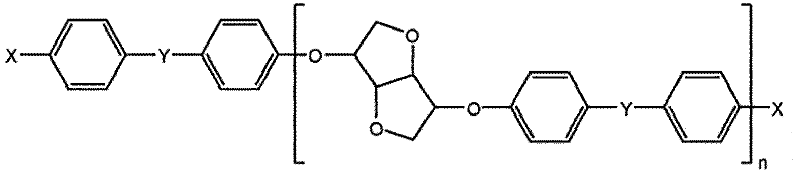
mit einer zahlenmittleren Molmasse Mₙ zwischen 1000 und 30 OOO g/mol und wobei n eine ganze Zahl größer als 1 ist, **X** CI oder F ist und **Y** CO oder S0₂ ist,
wobei die Herstellung des ersten Blocks aus der Reaktion zwischen einem 1 ,4: 3,6-Dianhydrohexitol und einem Überschuss einer halogenierten bis-aromatischen Verbindung besteht, ausgewählt aus 4,4'-Dichlordiphenylsulfon, 4,4'-Difluordiphenylsulfon, 4,4'-Difluordiphenylketon und 4,4'-Dichlordiphenylketon in Gegenwart einer Base in einem organischen Lösungsmittel,
b) Herstellung eines zweiten Polymerblocks mit der Wiederholungseinheit: 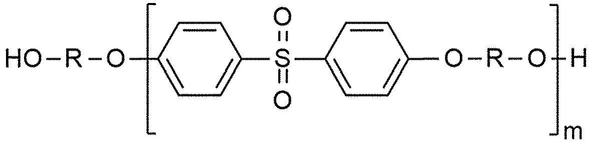
mit einer zahlenmittleren Molmasse Mₙ zwischen 1000 und 30 OOO g/mol und wobei **m** eine ganze Zahl größer als 1 ist und **R** von einem aromatischen oder aliphatischen Diol stammt.
wobei die Herstellung dieses zweiten Blocks aus der Reaktion zwischen einem aromatischen oder aliphatischen Diol im Überschuss oder in stöchiometrischer Menge mit 4, 4'-Dichlordiphenylsulfon oder 4,4'-Difluordiphenylsulfon in Gegenwart einer Base in einem organischen Lösungsmittel und gegebenenfalls einem Co-Lösungsmittel besteht,
c) Reaktion zwischen dem ersten Block und dem zweiten Block gemäß der Blockcopolymerisation in zwei aufeinanderfolgenden Schritten oder der Blockcopolymerisation in zwei unterschiedlichen Schritten.

2. Verfahren nach Anspruch 1, **dadurch gekennzeichnet, dass** das organische Lösungsmittel in dem Schritt der Herstellung des ersten Polymerblocks ein polares aprotisches Lösungsmittel ist.

3. Verfahren nach einem der vorhergehenden Ansprüche, **dadurch gekennzeichnet, dass** das in dem Schritt zur Herstellung des ersten Polymerblocks verwendete 1,4:3,6-Dianhydrohexitol Isosorbid ist.

4. Verfahren nach einem der vorhergehenden Ansprüche, **dadurch gekennzeichnet, dass** der Anteil an Monomeren zwischen 10 Massen-% und 50 Massen-%, bezogen auf die Summe der Masse des Lösungsmittels und der Masse der Monomere, umfasst ist.

5. Verfahren nach einem der vorhergehenden Ansprüche, **dadurch gekennzeichnet, dass** der Schritt der Herstellung des ersten Polymerblocks bei einer Temperatur, umfasst zwischen 160°C und 250°C, durchgeführt wird.

6. Verfahren nach einem der vorhergehenden Ansprüche, **dadurch gekennzeichnet, dass** die Herstellung des ersten Polymerblocks und die Herstellung des zweiten Polymerblocks in demselben Reaktionsmedium durchgeführt werden.

7. Verfahren nach einem der vorhergehenden Ansprüche, **dadurch gekennzeichnet, dass** der Schritt der Herstellung des zweiten Blocks mit einem Molverhältnis 1, 4:3,6-Dianhydrohexitol/Bisphenol A, umfasst zwischen 1/99 und 99/1, durchgeführt wird.

8. Verfahren nach einem der vorhergehenden Ansprüche, **dadurch gekennzeichnet, dass** das organische Lösungsmittel im Schritt der Herstellung des zweiten Polymerblocks ein aprotisches polares Lösungsmittel ist.

9. Verfahren nach einem der vorhergehenden Ansprüche, **dadurch gekennzeichnet, dass** das Molverhältnis von aprotischem polarem Lösungsmittel/Co-Lösungsmittel zwischen 0,1 und 10 umfasst ist.

10. Verfahren nach einem der vorhergehenden Ansprüche, **dadurch gekennzeichnet, dass** der Schritt der Herstellung des zweiten Polymerblocks bei einer Temperatur, umfasst zwischen 90°C und 150°C, durchgeführt wird.

11. Verfahren nach einem der vorhergehenden Ansprüche, **dadurch gekennzeichnet, dass** der Schritt der Reaktion zwischen dem ersten Block und dem zweiten Block bei einer Temperatur, umfasst zwischen 150°C und 200°C, durchgeführt wird.

12. Blockcopolymer vom Typ aromatischer Polyether, umfassend die Wiederholungseinheiten der Formel I: 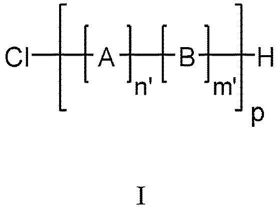 in der **A** 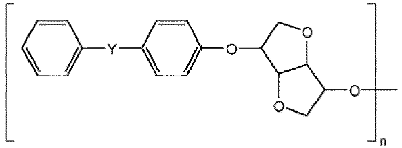 ist, wobei Y CO oder S0₂ ist und n eine ganze Zahl größer als 1 ist, B 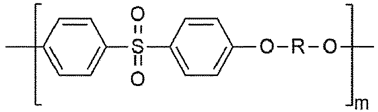 ist, wobei R von einem aliphatischen oder aromatischen Diol stammt und m eine ganze Zahl größer als 1 ist,
n' und **m'** jeweils unabhängig voneinander eine ganze Zahl größer als 1 sind, das Molverhältnis **n'**/**m'** zwischen 1/99 bis 99/1 umfasst ist und **p** eine ganze Zahl größer als 1 ist.

13. Blockcopolymer nach Anspruch 12, bei dem das mittlere Molekulargewicht größer als 30.000 g/mol ist.

14. Verwendung eines Blockcopolymers, das durch das Verfahren nach einem der Ansprüche 1 bis 11 oder des Copolymers nach einem der Ansprüche 12 oder 13 erhalten werden kann, zur Erzeugung von Membranen.

## Claims

1. Method for preparing a block copolymer of the aromatic polyether type, comprising the following successive steps:
a) preparing a first polymer block having the repeat unit: 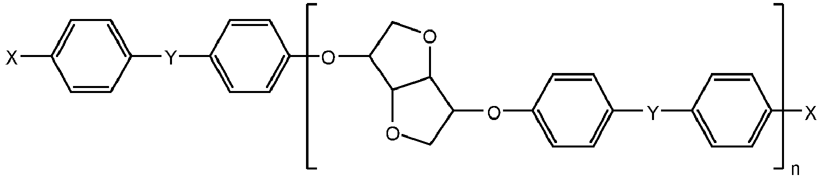
with number mean molar mass Mₙ between 1000 and 30,000 g/mol and where **n** is an integer greater than 1, **X** is Cl or F and **Y** is CO or SO₂,
the preparation of said first block consisting of the reaction between a 1,4:3,6-dianhydrohexitol and an excess of a halogenated bis-aromatic compound selected from 4,4'-dichlorodiphenyl sulfone, 4,4'-difluorodiphenyl sulfone, 4,4'-difluorodiphenyl ketone and 4,4'-dichlorodiphenyl ketone in the presence of a base in an organic solvent,
b) preparing a second polymer block having the repeat unit: 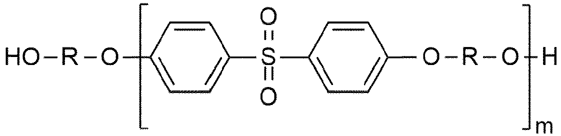 with number mean molar mass Mₙ between 1000 and 30,000 g/mol and where **m** is an integer understood greater than 1 and **R** comes from an aromatic or aliphatic diol, the preparation of the second block consisting of the reaction between an aromatic or aliphatic diol in excess or in stoichiometric quantity with 4,4'-dichlorodiphenyl sulfone or 4,4'-difluorodiphenyl sulfone in the presence of a base in an organic solvent and optionally a co-solvent,
c) reaction between the first block and the second block according to block copolymerisation in two successive steps or block copolymerisation in two distinct steps.

2. Method according to claim 1, **characterised in that** the organic solvent of the step of preparing the first polymer block is a polar aprotic solvent.

3. Method according to either one of the preceding claims, **characterised in that** the 1,4:3,6-dianhydrohexitol used in the step of preparing the first polymer block is isosorbide.

4. Method according to any one of the preceding claims, **characterised in that** the proportion of monomers is between 10% and 50% by mass with respect to the sum of the mass of the solvent and of the mass of the monomers.

5. Method according to any one of the preceding claims, **characterised in that** the step of preparing the first polymer block is implemented at a temperature of between 160°C and 250°C.

6. Method according to any one of the preceding claims, **characterised in that** the preparation of the first polymer block and the preparation of the second polymer block are implemented in the same reaction medium.

7. Method according to any one of the preceding claims, **characterised in that** the step of preparing the second block is implemented with a 1,4:3,6-dianhydrohexitol/bisphenol A molar ratio of between 1:99 and 99: 1.

8. Method according to any one of the preceding claims, **characterised in that** the organic solvent of the step of preparing the second polymer block is a polar aprotic solvent.

9. Method according to any one of the preceding claims, **characterised in that** the polar aprotic solvent/co-solvent molar ratio is between 0.1 and 10.

10. Method according to any one of the preceding claims, **characterised in that** the step of preparing the second polymer block is implemented at a temperature of between 90°C and 150°C.

11. Method according to any one of the preceding claims, **characterised in that** the step of reaction between the first block and the second block is implemented at a temperature of between 150°C and 200°C.

12. Block copolymer of the aromatic polyether type comprising the repeat units of formula I: 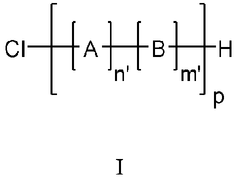 wherein **A** is 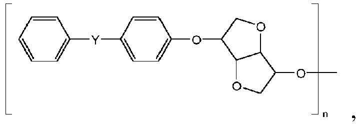 where Y is CO or SO₂ and n is an integer greater than 1, **B** is 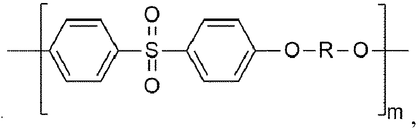 where **R** comes from an aliphatic or aromatic diol and m is an integer greater than 1,
n' and **m'** are each, independently of each other, an integer greater than 1, the **n'/m'** molar ratio is between 1:99 and 99:1, and **p** is an integer greater than 1.

13. Block copolymer according to claim 12, wherein the mean molecular mass is greater than 30,000 g/mol.

14. Use of a block copolymer able to be obtained by the method according to one of claims 1 to 11 or of the copolymer according to one of claims 12 or 13 for manufacturing membranes.
